# EUROPÄISCHE PATENTANMELDUNG

(11) **EP 1 199 549 A1**
(43) Veröffentlichungstag der Anmeldung: **24.04.2002**
(21) Anmeldenummer: 00122822.0
(22) Anmeldetag: 20.10.2000
(51) Int. Cl.: G01J 3/44

(54) **Verfahren und Vorrichtung zur hochauflösenden Spektroskopie unter Verwendung von Stimulierter Brillouin Streuung**

(71) Anmelder: Acterna Eningen GmbH, 72800 Eningen (DE)
(72) Erfinder: Löcklin, Eberhard, Dr., 72766 Reutlingen (DE)
(74) Vertreter: KOHLER SCHMID + PARTNER

(57) **Zusammenfassung**

Um einen Spektralanteil aus einem optischen Signal (2) selektiv auszukoppeln, werden Anregungslicht (5) bestimmter Wellenlänge (λ₀), vorzugsweise ein Laserstrahl, und das optische Signal (2) in eine Lichtleitfaser (8) eingekoppelt, wobei das Anregungslicht (5) eine solch hohe Intensität aufweist, daß innerhalb der Lichtleitfaser (8) bei der Wellenlänge (λ₀) des Anregungslichts (5) das Anregungslicht (5) und das optische Signal (2) selektiv rückgestreut werden. Eine zugehörige Meßvorrichtung (1) umfaßt eine Lichtleitfaser (8), in die das Anregungslicht (5) bestimmter Wellenlänge (λ₀), vorzugsweise ein Laserstrahl, und das optische Signal (2) eingekoppelt werden, wobei das Anregungslicht (5) eine solch hohe Intensität aufweist, daß innerhalb der Lichtleitfaser (8) bei der Wellenlänge (λ₀) des Anregungslichts (5) das Anregungslicht (5) und das optische Signal (2) selektiv rückgestreut werden, und einen Detektor (10) für den rückgestreuten Lichtanteil (9).

## Beschreibung

Die Erfindung betrifft ein Verfahren zum selektiven Auskoppeln eines Spektralanteils aus einem optischen Signal sowie eine Vorrichtung zum Messen eines aus einem optischen Signal selektiv ausgekoppelten Spektralanteils.

Üblicherweise werden zum selektiven Auskoppeln eines Spektralanteils aus einem optischen Signal optische Filter oder optische Gitter verwendet, die nur eine bestimmte Wellenlänge oder nur einen bestimmten Wellenlängenbereich des optischen Signals durchlassen.

Demgegenüber ist es die Aufgabe der Erfindung, ein anderes Verfahren zum selektiven Auskoppeln eines Spektralanteils aus einem optischen Signal anzugeben sowie eine geeignete Vorrichtung zum Messen des ausgekoppelten Spektralanteils bereitzustellen.

Diese Aufgabe wird durch ein Verfahren gelöst, bei dem Anregungslicht bestimmter Wellenlänge, vorzugsweise ein Laserstrahl, und das optische Signal in eine Lichtleitfaser eingekoppelt werden, wobei das Anregungslicht eine solch hohe Intensität aufweist, daß innerhalb der Lichtleitfaser bei der Wellenlänge des Anregungslichts das Anregungslicht und das optische Signal selektiv rückgestreut werden.

Erfindungsgemäß verändert das der Lichtleitfaser zugeführte Anregungslicht hoher Energie die Fasereigenschaften so, daß die Lichtleitfaser in Rückstreurichtung als ein "wellenlängenselektives Element" wirkt. Der mit der Erfindung erzielte Vorteil besteht im selektiven Auskoppeln eines extrem schmalen Wellenlängenbereichs aus einem optischen Signal, wobei der freie Spektralbereich nicht wie z.B. bei Fabry-Perot-Filtern beschränkt ist. Weitere Vorteile der Erfindung bestehen in einer Steigerung der Wellenlängenauflösung gegenüber herkömmlichen Verfahren und in geringeren polarisationsabhängigen Verlusten (PDL: engl. Polarization Dependent Loss) als bei Heterodynempfang.

In einer bevorzugten Variante des erfindungsgemäßen Verfahrens wird der rückgestreute Lichtanteil im Frequenzbereich gemessen. Dazu kann z.B. das in die Lichtleitfaser einzukoppelnde optische Signal moduliert und der ausgekoppelte rückgestreute Lichtanteil mit einem frequenzselektiven Verstärker, vorzugsweise Lock-In-Verstärker gemessen werden.

In einer anderen bevorzugten Variante des erfindungsgemäßen Verfahrens wird der rückgestreute Lichtanteil im Zeitbereich gemessen. Dazu kann z.B. die Messung kurz nach Abschalten des Anregungslichts erfolgen.

Der rückgestreute Lichtanteil kann aus der Lichtleitfaser für eine Weiterverarbeitung, insbesondere für eine Messung, ausgekoppelt werden.

Die erfindungsgemäße Vorrichtung zum Messen eines aus einem optischen Signal selektiv ausgekoppelten Spektralanteils umfaßt eine Lichtleitfaser, in die das Anregungslicht bestimmter Wellenlänge, vorzugsweise ein Laserstrahl, und das optische Signal eingekoppelt werden, wobei das Anregungslicht eine solch hohe Intensität aufweist, daß innerhalb der Lichtleitfaser bei der Wellenlänge des Anregungslichts das Anregungslicht und das optische Signal selektiv rückgestreut werden, und einen Detektor für den rückgestreuten Lichtanteil.

Vorzugsweise ist mindestens ein optischer Koppler zum Auskoppeln des innerhalb der Lichtleitfaser rückgestreuten Lichtanteils und/oder zum Einspeisen des Anregungslichts in die Lichtleitfaser und/oder zum Einspeisen des optischen Signals in die Lichtleitfaser vorhanden. Falls es genügend schnelle optische Schalter gibt, könnte der Koppler durch einen Schalter ersetzt werden.

Bei einer bevorzugten Ausführungsform der erfindungsgemäßen Meßvorrichtung sind ein Modulator zum Modulieren des in die Lichtleitfaser einzuspeisenden optischen Signais und als Detektor ein frequenzselektiver Verstärker vorgesehen, der mit dem Modulator synchronisiert ist.

Bei einer anderen bevorzugten Ausführungsform der erfindungsgemäßen Meßvorrichtung ist eine gemeinsame Steuereinrichtung vorgesehen, die das Anregungslicht startet und beendet, wobei die Messung des auf den Detektor fallenden rückgestreuten Lichtanteils nach Abklingen des Anregungslichts erfolgt. Der Detektor wird entweder auch durch die gemeinsame Steuereinrichtung gestartet oder startet sich selbst, wenn die hohe Rückstreuleistung des Anregungslichts abgeklungen ist und nur noch das optische Spektrum rückgestreut wird.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: ein erstes Ausführungsbeispiel der erfindungsgemäßen Meßvorrichtung, bei der die Messung des ausgekoppelten rückgestreuten Lichtanteils im Frequenzbereich erfolgt;
- Fig. 2: ein zweites Ausführungsbeispiel der erfindungsgemäßen Meßvorrichtung, bei der die Messung des ausgekoppelten rückgestreuten Lichtanteils im Zeitbereich erfolgt;
- Fig. 3a: ein Diagramm, das die Intensität von in die Lichtleitfaser einzuspeisendem optischem Signal und Anregungslicht in Abhängigkeit der Wellenlänge zeigt; und
- Fig. 3b: ein Diagramm, das die Leistung des in der Lichtleitfaser rückgestreuten Lichtanteils in Abhängigkeit der Wellenlänge zeigt.

Wird kohärente Strahlung mit hoher Intensität in eine Glasfaser eingekoppelt, so wird infolge der Stimulierten Brillouin Streuung (SBS) innerhalb der Glasfaser ein großer Anteil der Strahlung bei der Wellenlänge der Strahlung zurückgestreut, sofern die Strahlung eine für die SBS ausreichend hohe Intensität hat. Dieser Effekt tritt zeitverzögert mit einer Zeitkonstante von einigen Millisekunden auf, so daß auch nach Abschalten der kohärenten Strahlung noch eine spektral hoch selektive Rückstrahlung erfolgt. Die SBS wird genutzt, um aus einem optischen Signal einen Spektralanteil selektiv auszusondern, d.h. filtern, und zu messen. Auch unterhalb der Schwelle für SBS findet zwar auch eine Rückstreuung z.B. aufgrund von Rayleigh-Streuung statt, allerdings um mehrere Größenordnungen kleiner.

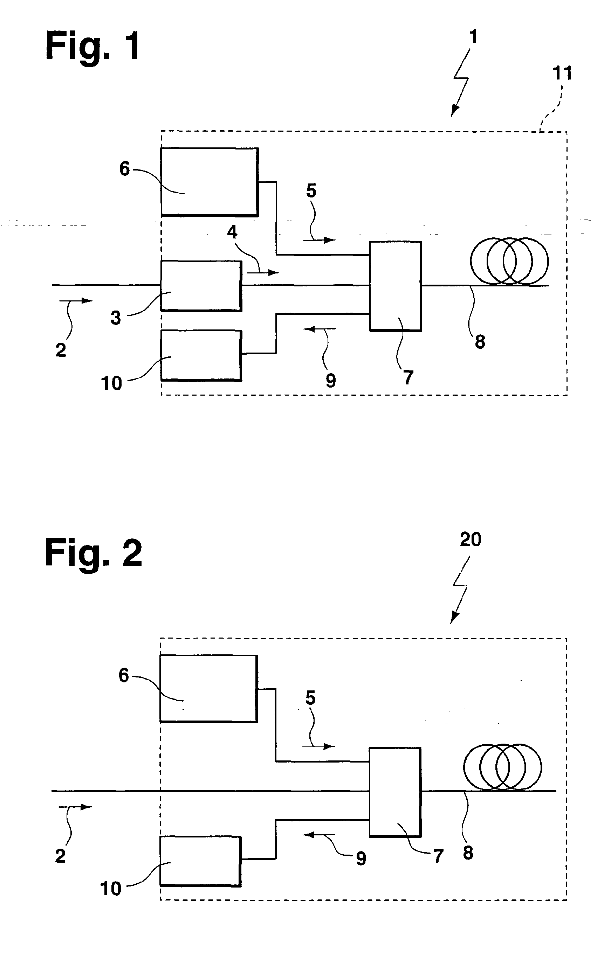

In **Fig. 1** ist eine erste Meßvorrichtung **1** zum selektiven Auskoppeln eines Spektralanteils aus einem optischen Signal **2** gezeigt, wobei die Messung des Spektralanteils im Frequenzbereich erfolgt. In der Meßvorrichtung 1 wird das optische Signal 2 mittels eines Modulators **3**, z.B. eines Choppers, moduliert. Das modulierte optische Signal **4** und das Anregungslicht **5** eines Lasers **6** bestimmter Wellenlänge werden über einen optischen Koppler **7** in eine Lichtleitfaser **8**, z.B. eine Glasfaser, eingespeist. Ein sich in der Lichtleitfaser 8 in Richtung zurück auf den optischen Koppler 7 ausbreitender Lichtanteil wird über den optischen Koppler 7 ausgekoppelt. Dieser ausgekoppelte Lichtanteil **9** wird einem als frequenzselektiven Verstärker ausgebildeten Detektor **10** zugeführt, der auf die Frequenz des Modulators 3 eingestellt ist. Das Gehäuse der Meßvorrichtung 1 ist mit **11** bezeichnet.

Wenn der Laser, mit dem das Anregungslicht 5 erzeugt wird, abstimmbar ist, kann nacheinander jede beliebige Wellenlänge und damit das gesamte Spektrum gemessen werden.

**Fig. 2** zeigt eine zweite Meßvorrichtung **20** zum selektiven Auskoppeln eines Spektralanteils aus einem optischen Signal **2**, wobei die Messung des Spektralanteils im Zeitbereich erfolgt. Das optische Signal 2 wird unmoduliert in die Lichtleitfaser 8 eingespeist. Die Messung des über den Koppler 7 ausgekoppelten rückgestreuten Lichtanteils 9 im Detektor 10 erfolgt zeitverzögert erst, wenn die hohe Rückstreuleistung des Anregungslichts 5 abgeklungen ist und nur noch das optische Signal 2 rückgestreut wird. Dabei ist diese Zeitverzögerung kleiner als die SBS-Zeitkonstante.

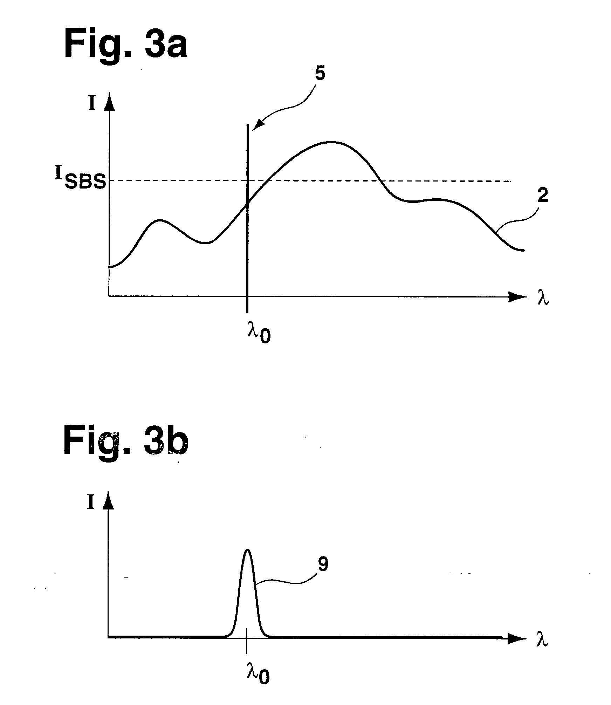

In **Fig. 3a** ist die Intensität I des optischen Signals 2 und des Anregungslichts 5 jeweils in Abhängigkeit der Wellenlänge λ aufgetragen. Das optische Signal 2 ist ein optisches Spektrum, das bei der Wellenlänge λ₀ des Anregungslichts 5 unterhalb der Intensitätsschwelle I_{SBS} für die SBS-Streuung liegt. Die Intensität des Anregungslichts 5 ist größer als diese Intensitätsschwelle I_{SBS}. Das Anregungslicht 5 bewirkt in der Lichtleitfaser 8 bei der Wellenlänge λ₀ bzw. innerhalb eines schmalen Bereichs um die Wellenlänge λ₀ eine SBS-Streuung, so daß es nur um diese Wellenlänge λ₀ zu einem rückgestreuten Lichtanteil 9 des eingespeisten Lichts kommt.

In der Meßvorrichtungen 1 wird mit dem frequenzselektiven Detektor 10 aus dem rückgestreuten Lichtanteil 9 nur der modulierte Lichtanteil 4 gemessen, also der um die Wellenlänge λ₀ herum liegende Spektralanteil des optischen Signals 2. Die mit dem frequenzselektiven Detektor 10 gemessene Intensität I ist in **Fig. 3b** gezeigt.

Bei der Meßvorrichtung 20 kommt es aufgrund der SBS-Zeitkonstante auch nach Abschalten des Anregungslichts 5 zu einer SBS-Streuung bei der Wellenlänge λ₀ bzw. innerhalb eines schmalen Bereichs um die Wellenlänge λ₀ des Anregungslichts 5 herum. Am Detektor 10 wird nach Abklingen des rückgestreuten Lichtanteils des Anregungslichts 5 nur noch der innerhalb dieses Wellenlängenbereichs liegende Spekträlanteil des optischen Signals 2 gemessen, so daß sich ebenfalls die in Fig. 3b gezeigte Intensitätsverteilung ergibt.

Mit beiden Meßvorrichtungen 1 und 20 kann daher aus einem unbekannten optischen Signal der genau bei der Wellenlänge λ₀ des Anregungslichts 5 liegende Spektralanteil selektiv ausgesondert und gemessen werden, und zwar mit hoher Wellenlängenauflösung.

## Patentansprüche

1. Verfahren zum selektiven Auskoppeln eines Spektralanteils aus einem optischen Signal (2), bei dem Anregungslicht (5) bestimmter Wellenlänge (λ₀), vorzugsweise ein Laserstrahl, und das optische Signal (2) in eine Lichtleitfaser (8) eingekoppelt werden, wobei das Anregungslicht (5) eine solch hohe Intensität aufweist, daß innerhalb der Lichtleitfaser (8) bei der Wellenlänge (λ₀) des Anregungslichts (5) das Anregungslicht (5) und das optische Signal (2) selektiv rückgestreut werden.

2. Verfahren nach Anspruch 1, **dadurch gekennzeichnet, daß** der rückgestreute Lichtanteil (9) im Frequenzbereich gemessen wird.

3. Verfahren nach Anspruch 2, **dadurch gekennzeichnet, daß** das in die Lichtleitfaser (8) einzukoppelnde optische Signal (2) moduliert und der rückgestreute Lichtanteil (9) mit einem frequenzselektiven Verstärker (10) gemessen wird.

4. Verfahren nach Anspruch 1, **dadurch gekennzeichnet, daß** der rückgestreute Lichtanteil (9) im Zeitbereich gemessen wird.

5. Verfahren nach Anspruch 4, **dadurch gekennzeichnet, daß** die Messung kurz nach Abschalten des Anregungslichts (5) erfolgt.

6. Verfahren nach einem der vorhergehenden Ansprüche, **dadurch gekennzeichnet, daß** der rückgestreute Lichtanteil (9) aus der Lichtleitfaser (8) für eine Weiterverarbeitung, insbesondere für eine Messung, ausgekoppelt wird.

7. Vorrichtung (1; 20) zum Messen eines aus einem optischen Signal (2) selektiv ausgekoppelten Spektralanteils, insbesondere zum Durchführen des Verfahrens nach einem der vorhergehenden Ansprüche,
mit einer Lichtleitfaser (8), in die Anregungslicht (5) bestimmter Wellenlänge (λ₀), vorzugsweise ein Laserstrahl, und das optische Signal (2) eingekoppelt werden, wobei das Anregungslicht (5) eine solch hohe Intensität aufweist, daß innerhalb der Lichtleitfaser (8) bei der Wellenlänge (λ₀) des Anregungslichts (5) das Anregungslicht (5) und das optische Signal (2) selektiv rückgestreut werden, und
mit einem Detektor (10) für den rückgestreuten Lichtanteil (9).

8. Meßvorrichtung nach Anspruch 7, **gekennzeichnet durch** mindestens einen optischen Koppler oder Schalter (7) zum Auskoppeln des innerhalb der Lichtleitfaser (8) rückgestreuten Lichtanteils (9) und/oder zum Einspeisen des Anregungslichts (5) in die Lichtleitfaser (8) und/oder zum Einspeisen des optischen Signals (2) in die Lichtleitfaser (8).

9. Meßvorrichtung nach Anspruch 7 oder 8, **dadurch gekennzeichnet, daß** ein Modulator (3) zum Modulieren des in die Lichtleitfaser (8) einzuspeisenden optischen Signals und ein Detektor (10), mit dem selektiv bei der Modulationsfrequenz gemessen wird, vorgesehen sind.

10. Meßvorrichtung nach Anspruch 7 oder 8, **gekennzeichnet durch** eine Steuereinrichtung, die das Anregungslicht (5) startet und beendet, wobei die Messung des auf den Detektor (10) fallenden rückgestreuten Lichtanteils (9) nach Abklingen des Anregungslichts (5) erfolgt.
